# EUROPÄISCHE PATENTANMELDUNG

(11) **EP 2 657 494 A1**
(43) Veröffentlichungstag der Anmeldung: **30.10.2013**
(21) Anmeldenummer: 12165107.9
(22) Anmeldetag: 23.04.2012
(51) Int. Cl.: F02D 41/30, F02M 25/07, F02B 1/12, F02B 3/04

(54) **Fremdgezündete Brennkraftmaschine mit die mindestens zwei Zylinder trennendem Wandabschnitt**

(71) Anmelder: Ford Global Technologies, LLC, Dearborn, MI 48126 (US)
(72) Erfinder: Breuer, Albert, 50769 Köln (DE); Springer, Klaus Moritz, 58095 Hagen (DE)
(74) Vertreter: Drömer, Hans-Carsten

(57) **Zusammenfassung**

Die Erfindung betrifft eine fremdgezündete Brennkraftmaschine mit mindestens einem Zylinderkopf (11) und mindestens zwei Zylindern (1), bei der
- jeder Zylinder (1) mindestens eine Auslaßöffnung (2a, 2b) zum Abführen der Abgase aus dem Zylinder (1) via Abgasabführsystem (3) aufweist,
- sich an jede Auslaßöffnung (2a, 2b) eine Abgasleitung (4) anschließt,
- die Abgasleitungen (4) von mindestens zwei Zylindern (1) unter Ausbildung eines Abgaskrümmers zu einer gemeinsamen Abgasleitung (5) zusammenführen, wobei ein Wandabschnitt (6), der in das Abgasabführsystem (3) hineinragt, die mindestens eine Abgasleitung (4) eines ersten Zylinders (1) und die mindestens eine Abgasleitung (4) eines zweiten Zylinders (1) ausgehend von den Auslaßöffnungen (2a, 2b) der beiden Zylinder (1) über eine vorgebare Wegstrecke voneinander trennt, und
- das Abgasabführsystem (3) an einer Außenseite des mindestens einen Zylinderkopfes (11) austritt.

Es soll eine Brennkraftmaschine der genannten Art bereitgestellt werden, mit der die aus dem Stand der Technik bekannte Problematik betreffend die Fremdzündung bzw. die Einleitung der Fremdzündung eliminiert wird.

Erreicht wird dies mit einer Brennkraftmaschine, die dadurch gekennzeichnet ist, dass
- in dem Wandabschnitt (6) mindestens eine Öffnung (7) vorgesehen ist, die mit einem verstellbaren Absperrelement (8) ausgestattet ist, welches diese Öffnung (7) freigibt oder verschließt, so dass bei freigegebener Öffnung (7) als Zündgas
- dienendes und während des Ladungswechsels in das Abgasabführsystem (3) abgeführtes Abgas eines Zylinders (1) via Abgasabführsystem (3) und freigegebener Öffnung (7) in den anderen Zylinder (1) einleitbar ist, um eine Selbstzündung zu induzieren.

## Beschreibung

Die Erfindung betrifft eine fremdgezündete Brennkraftmaschine mit mindestens einem Zylinderkopf und mindestens zwei Zylindern, bei der
- jeder Zylinder mindestens eine Auslaßöffnung zum Abführen der Abgase aus dem Zylinder via Abgasabführsystem aufweist,
- sich an jede Auslaßöffnung eine Abgasleitung anschließt,
- die Abgasleitungen von mindestens zwei Zylindern unter Ausbildung eines Abgaskrümmers zu einer gemeinsamen Abgasleitung zusammenführen, wobei ein Wandabschnitt, der in das Abgasabführsystem hineinragt, die mindestens eine Abgasleitung eines ersten Zylinders und die mindestens eine Abgasleitung eines zweiten Zylinders ausgehend von den Auslaßöffnungen der beiden Zylinder über eine vorgebare Wegstrecke voneinander trennt, und
- das Abgasabführsystem an einer Außenseite des mindestens einen Zylinderkopfes austritt.

Eine Brennkraftmaschine der genannten Art wird als Antrieb für Kraftfahrzeuge eingesetzt. Im Rahmen der vorliegenden Erfindung umfaßt der Begriff Brennkraftmaschine Ottomotoren, die mit einer Fremdzündung ausgestattet sind.

Brennkraftmaschinen verfügen über mindestens einen Zylinderkopf und einen Zylinderblock, die zur Ausbildung der einzelnen Zylinder, d. h. Brennräume, an ihren Montage-Stirnseiten miteinander verbunden werden.

Der Zylinderkopf dient häufig zur Aufnahme des Ventiltriebs. Um den Ladungswechsel zu steuern, benötigt eine Brennkraftmaschine Steuerorgane und Betätigungseinrichtungen zur Betätigung der Steuerorgane. Im Rahmen des Ladungswechsels erfolgt das Ausschieben der Verbrennungsgase über die Auslaßöffnungen und das Füllen des Brennraums, d. h. das Ansaugen des Frischgemisches bzw. der Frischluft, über die Einlaßöffnungen. Zur Steuerung des Ladungswechsels werden bei Viertaktmotoren nahezu ausschließlich Hubventile als Steuerorgane verwendet, die während des Betriebs der Brennkraftmaschine eine oszillierende Hubbewegung ausführen und auf diese Weise die Einlaß- und Auslaßöffnungen freigeben und verschließen. Der für die Bewegung der Ventile erforderliche Ventilbetätigungsmechanismus einschließlich der Ventile selbst wird als Ventiltrieb bezeichnet. Eine Ventilbetätigungseinrichtung umfaßt häufig eine Nockenwelle, auf der eine Vielzahl von Nocken angeordnet ist.

Es ist die Aufgabe des Ventiltriebes die Einlaß- und Auslaßöffnungen der Zylinder rechtzeitig freizugeben bzw. zu verschließen, wobei eine schnelle Freigabe möglichst großer Strömungsquerschnitte angestrebt wird, um die Drosselverluste in den ein- bzw. ausströmenden Gasströmungen gering zu halten und eine möglichst gute Füllung des Zylinders mit Frischgemisch bzw. ein effektives, d. h. vollständiges Abführen der Abgase zu gewährleisten.

Die mindestens zwei Zylinder der Brennkraftmaschine, die Gegenstand der vorliegenden Erfindung ist, weisen mindestens eine Auslaßöffnung zum Abführen der Abgase auf. Die Abgasleitungen von mindestens zwei Zylindern werden unter Ausbildung eines Abgaskrümmers zusammengeführt. Stromabwärts des Krümmers werden die Abgase dann gegebenenfalls der Turbine eines Abgasturboladers und/oder einem oder mehreren Abgasnachbehandlungssystemen zugeführt.

Die Laststeuerung bei einem Ottomotor erfolgt in der Regel mittels einer im Ansaugtrakt vorgesehenen Drosselklappe. Durch Verstellen der Drosselklappe kann der Druck der angesaugten Luft hinter der Drosselklappe mehr oder weniger stark reduziert werden. Bei konstantem Brennraumvolumen kann auf diese Weise über den Druck der angesaugten Luft die Luftmasse, d. h. die Quantität, eingestellt werden. Niedrige Lasten erfordern eine stärkere Drosselung, d. h. umfängliche Druckabsenkung im Ansaugtrakt, weshalb insbesondere im Teillastbereich große Ladungswechselverluste hinzunehmen sind. Insofern weist das Kraftstoff-Luft-Gemisch im Zylinder bei niedrigen Lasten eine geringere Dichte auf als bei höheren Lasten.

Die lastabhängige Variation der Dichte kann bei der Einleitung der Fremdzündung, beispielweise mittels Zündkerze, Probleme bereiten. Um eine sichere Entzündung des Kraftstoff-Luft-Gemisches bei niedrigen Lasten, d. h. bei weniger dichtem Gemisch, zu gewährleisten, müssen die Elektroden der Zündkerze einen vergleichsweise großen Abstand aufweisen, um eine große Zündstrecke für den Zündfunken auszubilden, d. h. bereitzustellen. Ein großer Elektrodenabstand erfordert eine hohe Zündspannung.

Wird dann das Kraftstoff-Luft-Gemisch zu hohen Lasten hin dichter, wird der Spannungsbedarf, um eine sichere Zündung einzuleiten, zusätzlich erhöht, da das zwischen den Elektroden befindliche Kraftstoff-Luft-Gemisch höherer Dichte eine isolierende Wirkung betreffend den Übertritt des Zündfunkens von der einen Elektrode auf die andere Elektrode hat.

Die hohe erforderliche Zündspannung kann die Zündkerze selbst und/oder andere Bauteile, insbesondere Hochspannung führende Bauteile der Stromversorgung, d. h. des Bordnetzes des Kraftfahrzeuges, schädigen. Bei zu hohem Zündspannungsbedarf können Funkenüberschläge zwischen den Hochspannungsleitungen und der Masse auftreten. Die Ausbildung eines Zündfunkens zwischen den Elektroden unterbleibt. Es kommt zu einer Fehlzündung.

Neben der Dichte des Gemisches hat auch das Luftverhältnis λ Einfluß auf die Einleitung der Fremdzündung, insbesondere aber Einfluß auf die mittels Zündfunken induzierte Verbrennung.

In Abhängigkeit von der momentan vorliegenden Last T kann das Kraftstoff-Luft-Gemisch eines Ottomotors angefettet bzw. abgemagert werden, wobei vorzugsweise zu hohen Lasten hin eine Anfettung vorgenommen wird, d. h. das Luftverhältnis λ wird verringert.

Häufig erfolgt eine Anfettung (λ < 1) immer dann, wenn mit hohen Abgastemperaturen zu rechnen ist, d. h. bei hohen Lasten, um eine thermische Überlastung einzelner Komponenten der Brennkraftmaschine zu vermeiden. Dabei wird mehr Kraftstoff eingespritzt als mit der bereitgestellten Luftmenge verbrannt werden kann, wobei der überschüssige Kraftstoff ebenfalls erwärmt und verdampft wird, so dass die Temperatur der Verbrennungsgase sinkt. Diese Vorgehensweise ist unter energetischen Aspekten, insbesondere hinsichtlich des Kraftstoffverbrauchs der Brennkraftmaschine, und hinsichtlich der Schadstoffemissionen als nachteilig anzusehen, aber zulässig und als zielführend anerkannt.

Wird das Kraftstoff-Luft-Gemisch zu hohen Lasten hin angefettet, erhöht dies ebenfalls den Zündspannungsbedarf, da eine Anfettung die isolierende Wirkung des zwischen den Elektroden befindlichen dichten Kraftstoff-Luft-Gemisches verstärkt.

Wird das Kraftstoff-Luft-Gemisch hingegen verdünnt, beispielsweise infolge Abmagerung (λ > 1), ist es - wie bei einem Kraftstoff Luft-Gemisch geringer Dichte - vorteilhaft, wenn die Elektroden der Zündkerze einen vergleichsweise großen Abstand aufweisen, um eine sichere Entzündung des verdünnten Gemisches zu gewährleisten.

Die Abmagerung des Kraftstoff-Luft-Gemisches hin zu niedrigen Lasten ist eine Maßnahme zur Entdrosselung der Brennkraftmaschine, wobei weniger Kraftstoff eingespritzt wird als mit der bereitgestellten Luftmenge verbrannt werden könnte, d. h. es wird mehr Frischluft in die Zylinder eingeleitet als zur Verbrennung des eingebrachten Kraftstoffes erforderlich ist, wodurch eine Verdünnung des Gemisches erfolgt.

Vor dem Hintergrund des Gesagten ist es die Aufgabe der vorliegenden Erfindung, eine fremdgezündete Brennkraftmaschine gemäß dem Oberbegriff des Anspruchs 1 bereitzustellen, mit der die aus dem Stand der Technik bekannte Problematik betreffend die Fremdzündung bzw. die Einleitung der Fremdzündung eliminiert wird.

Gelöst wird diese Aufgabe durch eine fremdgezündete Brennkraftmaschine mit mindestens einem Zylinderkopf und mindestens zwei Zylindern, bei der
- jeder Zylinder mindestens eine Auslaßöffnung zum Abführen der Abgase aus dem Zylinder via Abgasabführsystem aufweist,
- sich an jede Auslaßöffnung eine Abgasleitung anschließt,
- die Abgasleitungen von mindestens zwei Zylindern unter Ausbildung eines Abgaskrümmers zu einer gemeinsamen Abgasleitung zusammenführen, wobei ein Wandabschnitt, der in das Abgasabführsystem hineinragt, die mindestens eine Abgasleitung eines ersten Zylinders und die mindestens eine Abgasleitung eines zweiten Zylinders ausgehend von den Auslaßöffnungen der beiden Zylinder über eine vorgebare Wegstrecke voneinander trennt, und
- das Abgasabführsystem an einer Außenseite des mindestens einen Zylinderkopfes austritt, und
die dadurch gekennzeichnet ist, dass
- in dem Wandabschnitt mindestens eine Öffnung vorgesehen ist, die mit einem verstellbaren Absperrelement ausgestattet ist, welches diese Öffnung freigibt oder verschließt, so dass bei freigegebener Öffnung als Zündgas dienendes und während des Ladungswechsels in das Abgasabführsystem abgeführtes Abgas eines Zylinders via Abgasabführsystem und freigegebener Öffnung in den anderen Zylinder einleitbar ist, um eine Selbstzündung zu induzieren.

Bei der erfindungsgemäßen Brennkraftmaschine wird den unterschiedlichen lastspezifischen Anforderungen an die Zündkerze dadurch Rechnung getragen, dass - vorzugsweise in Abhängigkeit von der Last T - die Zündung des Kraftstoff-Luft-Gemisches entweder mittels Fremdzündung oder aber mittels Selbstzündung eingeleitet wird.

Um eine Selbstzündung einzuleiten, wird als Zündgas dienendes Abgas, das während des Ladungswechsels aus einem Zylinder in das Abgasabführsystem abgeführt wird, in einen anderen Zylinder eingeleitet, um mittels dieses Zündgases eine Selbstzündung zu induzieren.

Hierzu ist bei der erfindungsgemäßen Brennkraftmaschine in dem Wandabschnitt, der die Abgasleitungen der zwei - vorzugsweise in der Zündfolge benachbarten - Zylinder über eine begrenzte Wegstrecke voneinander trennt, eine mittels Absperrelement steuerbare Öffnung vorgesehen, um die Überleitung von Abgas von dem einen Zylinder in den anderen Zylinder zu ermöglichen bzw. bei freigegebener Öffnung zu erleichtern, d. h. zu verbessern. Bei freigegebener Öffnung wird als Zündgas dienendes Abgas via Abgasabführsystem und freigegebener Öffnung in den anderen Zylinder eingeleitet.

Vorteile bietet die erfindungsgemäße Brennkraftmaschine insbesondere bei hohen Lasten T. Eine zur Einleitung der Fremdzündung dienende Zündkerze kann mit einem großen Elektrodenabstand ausgebildet werden, der die sichere Entzündung eines weniger dichten Kraftstoff-Luft-Gemisches bei niedrigen Lasten gewährleistet. Zu hohen Lasten hin bzw. bei dichterem Gemisch wird zu einem Selbstzündverfahren übergegangen bzw. die Selbstzündung ergänzend hinzugenommen, um die Entzündung des Gemisches zu erreichen. Die in dem Wandabschnitt vorgesehene Öffnung wird dabei durch Verstellen des Absperrelements mehr oder weniger weit geöffnet, d. h. freigegeben.

Die Bezeichnung der Zylinder als erster Zylinder bzw. zweiter Zylinder dient im Rahmen der vorliegenden Erfindung lediglich der Unterscheidung der Zylinder. Jeder der mindestens zwei Zylinder der Brennkraftmaschine kann sowohl als abgasliefernder Zylinder als auch als abgasempfangender Zylinder fungieren und tut dies auch; in der Regel im Wechsel, d. h. abwechselnd.

Das von einem Zylinder in einen anderen Zylinder übergeleitete Abgas ist heißer als das mittels Abgasrückführung rückgeführte Abgas, insbesondere auch heißer als das mittels interner Abgasrückführung rückgeführte Abgas, welches definitionsgemäß aus dem Zylinder stammt, in den es intern wieder zurückgeführt wird. Dieser Umstand ist im Hinblick auf die Tatsache, dass das übergeleitete Abgas vorliegend als Zündgas verwendet wird, von besonderer Bedeutung und besonders vorteilhaft, da die Temperatur eine maßgebliche Einflußgröße bei der Einleitung der Selbstzündung darstellt. Je höher die Temperatur des Zündgases ist desto sicherer erfolgt die Einleitung einer Selbstzündung.

Wird die Selbstzündung, d. h. die Überleitung von Zündgas zum Zwecke einer Selbstzündung, wie oben bereits vorgeschlagen, bei hohen Lasten T durchgeführt, unterstützt dies ebenfalls die Einleitung der Selbstzündung mittels heißer Abgase. Einerseits ist das aus dem abgasliefernden Zylinder stammende Zündgas bei höheren Lasten heißer als bei niedrigen Lasten. Andererseits schafft das grundsätzlich hohe bzw. höhere Druck- und Temperaturniveau bei hohen Lasten gute Voraussetzungen für die Einleitung einer Selbstzündung im abgasempfangenden Zylinder.

Im Gegensatz hierzu eignet sich die erfindungsgemäße Selbstzündung nicht für niedrige Lasten, da die Selbstzündung unkontrolliert einsetzen oder ganz ausbleiben kann, so dass es zu einer unvollständigen Verbrennung oder zu Zündaussetzern und erhöhten Emissionen von unverbrannten Kohlenwasserstoffen und Kohlenmonoxid kommen kann. Folglich ist es vorteilhaft, bei niedrigen Lasten eine Fremdzündung anzuwenden.

Anders als bei dem aus dem Stand der Technik bekannten HCCI-Verfahren (Homogenous-Charge Compression-Ignition), das auch als Raumzündverfahren oder als CAI-Verfahren (Controlled Auto-Ignition) bezeichnet wird und bei dem eine kontrollierte Selbstzündung des homogenisierten Kraftstoff-Luft-Gemisches vorzugsweise gleichzeitig im gesamten Zylinder bzw. Brennraum angestrebt wird, wird bei der erfindungsgemäßen Brennkraftmaschine mittels einer begrenzten Menge heißen Abgases, dem Zündgas, wie mit einer Zündkerze und anstelle der Zündkerze lokal begrenzt die Selbstzündung eingeleitet. Dadurch werden Maximaldruck und Druckgradient der Verbrennung im Vergleich zur homogenen Selbstzündung begrenzt und die Kompressionszündung wird für höhere Lasten realisierbar. Vorliegend ist davon auszugehen, dass sich das aus dem abgasliefernden Zylinder stammende Zündgas nicht mit dem im abgasempfangenden Zylinder befindlichen Kraftstoff-Luft-Gemisch vollständig mischt, sondern lokal die Selbstzündung einleitet und als Ausgangspunkt für die Verbrennung des Gemisches anzusehen ist.

Die Einleitung der Selbstzündung bei hohen Lasten macht die Fremdzündung bei diesen Lasten entbehrlich, weshalb die Problematik der hochlastspezifischen Anforderungen an die Zündkerze entfällt, insbesondere das Erfordernis einer hohen Zündspannung bei hohen Lasten, bei denen die erfindungsgemäße Brennkraftmaschine mittels Selbstzündung gezündet wird.

Darüber hinaus weist das aus der Selbstzündung stammende Abgas eine vergleichsweise geringe Konzentration an Stickoxiden (NOₓ) und nahezu keinen Ruß auf, was sich vorteilhaft auf das Emissionsverhalten der Brennkraftmaschine auswirkt.

Mit der erfindungsgemäßen Brennkraftmaschine wird die der Erfindung zugrunde liegende Aufgabe gelöst, nämlich eine Brennkraftmaschine bereitgestellt, mit der die aus dem Stand der Technik bekannte Problematik betreffend die Fremdzündung bzw. die Einleitung der Fremdzündung eliminiert wird.

Im Zusammenhang mit dem Transfer von Abgas aus einem Zylinder der Brennkraftmaschine via Abgasabführsystem in einen anderen Zylinder, muß berücksichtigt werden, dass sich die Zylinder der Brennkraftmaschine beim Ladungswechsel in vielfältiger Weise gegenseitig beeinflussen können.

Diese Effekte sind bekannt und werden grundsätzlich als nachteilig angesehen. Insbesondere kann aufgrund kurzer Abgasleitungen der durch eine ablaufende Restgasausspülung erzielte Effekt zumindest teilweise durch den Ladungswechsel eines anderen Zylinders zunichte gemacht werden. So kann bei einem Vier-Zylinder-Reihenmotor, dessen Zylinder mit der Zündfolge 1 - 3 - 4 - 2 betrieben werden, beispielsweise der vierte Zylinder den in der Zündfolge benachbarten dritten Zylinder, d. h. den vorher gezündeten Zylinder, während des Ladungswechsels nachteilig beeinflussen und aus dem vierten Zylinder stammendes Abgas in den dritten Zylinder gelangen, bevor dessen Auslaßventile schließen. Die Evakuierung der Verbrennungsgase aus dem vierten Zylinder beruht dabei im Wesentlichen auf zwei unterschiedlichen Mechanismen. Wenn sich zu Beginn des Ladungswechsels ein Auslaßventil öffnet, strömen die Verbrennungsgase aufgrund des gegen Ende der Verbrennung im Zylinder vorherrschenden hohen Druckniveaus und der damit verbundenen hohen Druckdifferenz zwischen Brennraum und Abgasabführsystem mit hoher Geschwindigkeit durch die Auslaßöffnung in die Abgasleitung. Dieser druckgetriebene Strömungsvorgang ist um so stärker, je höher die Last T ist und wird durch eine hohe Druckspitze begleitet, die auch als Vorauslaßstoß bezeichnet wird und sich entlang der Abgasleitung fortpflanzt. Im weiteren Verlauf des Ladungswechsels gleichen sich die Drücke im Zylinder und in der Abgasleitung weitgehend an, so dass die Verbrennungsgase nun infolge der Kolbenbewegung ausgeschoben werden.

Die aus dem vierten Zylinder stammenden und in den dritten Zylinder eingeleiteten Abgase werden nach dem Stand der Technik als nachteilig angesehen. Um dieser Problematik entgegen zu treten, wird nach dem Stand der Technik die Öffnungsdauer der Auslaßventile bzw. der Auslaßöffnungen verkürzt, d. h. der Auslaß später geöffnet oder früher geschlossen. Aufgrund der verkürzten Öffnungsdauer der Auslaßventile ergeben sich aber Nachteile hinsichtlich der Leistung bei hohen Drehzahlen und der Reduzierung der Pumparbeit im Teillastbetrieb zur Verringerung des Kraftstoffverbrauchs. Andere aus dem Stand der Technik bekannte Konzepte zur Vermeidung der gegenseitigen Einflußnahme leiten die Abgasströme gruppenweise voneinander getrennt einer zweiflutigen Turbine zu oder trennen die Abgasströme durch Wandabschnitte, d. h. durch geeignete Ausbildung des Abgasabführsystems, für eine mehr oder weniger lange Wegstrecke voneinander.

Dass bei der erfindungsgemäßen Brennkraftmaschine die Überleitung von Abgas aus einem Zylinder in einen anderen Zylinder nicht verhindert, sondern gezielt herbeiführt wird, um dieses Abgas als vorteilhaftes Mittel zur Einleitung einer Selbstzündung zu nutzen, muß vor dem Hintergrund des zuvor Gesagten als Überwindung eines technischen Vorurteils angesehen werden.

Die Fremdzündung kann grundsätzlich deaktiviert werden, sobald auf Selbstzündung umgeschaltet wird und eine Selbstzündung mittels Zündgas induziert wird. Nichtsdestotrotz kann es vorteilhaft sein, beide Zündverfahren nebeneinander zur Anwendung zu bringen, d. h. auch bei Einleitung der Selbstzündung eine Fremdzündung vorzunehmen.

Weitere vorteilhafte Ausführungsformen der erfindungsgemäßen Brennkraftmaschine werden gemäß den Unteransprüchen beschrieben.

Vorteilhaft sind Ausführungsformen der fremdgezündeten Brennkraftmaschine, bei denen jeder Zylinder zur Einleitung einer Fremdzündung mit einer Zündkerze ausgestattet ist.

Vorteilhaft sind dabei Ausführungsformen der fremdgezündeten Brennkraftmaschine, bei denen der Abstand der Elektroden jeder Zündkerze auf niedrige Lasten auslegt ist.

Eine zur Einleitung der Fremdzündung dienende Zündkerze kann mit einem großen Elektrodenabstand ausgebildet werden, der die sichere Entzündung eines weniger dichten Kraftstoff-Luft-Gemisches bei niedrigen Lasten gewährleistet. Zu hohen Lasten hin bzw. bei dichterem Gemisch wird dann die Selbstzündung aktiviert, wozu unter anderem die in dem Wandabschnitt vorgesehene Öffnung zur Überleitung von Abgas freigegeben wird.

In diesem Zusammenhang sei darauf hingewiesen, dass Lasten T insbesondere dann als hoch angesehen werden, wenn gilt: *T > 0.5 Tₘₐₓ* bzw. *T > 0.65 Tₘₐₓ,* wobei *Tₘₐₓ* die maximale Last bei der jeweils vorliegenden Drehzahl n bezeichnet.

Ausgehend von einer aktivierten Selbstzündung ist es vorteilhaft, bei Unterschreiten einer vorgebbaren Last *T_{threshold}* wieder auf Fremdzündung umzustellen, wozu die Maßnahmen zur Einleitung der Selbstzündung unterbleiben, so dass die Selbstzündung deaktiviert wird.

Vorteilhaft sind Ausführungsformen der fremdgezündeten Brennkraftmaschine, bei denen die Abgasleitungen des ersten und des zweiten Zylinders unter Ausbildung eines integrierten Abgaskrümmers innerhalb des mindestens einen Zylinderkopfes zu einer gemeinsamen Abgasleitung zusammenführen.

Bei der Auslegung des Abgasabführsystems ist man bemüht, die thermische Trägheit des Teilstücks der Abgasleitungen zwischen Auslaßöffnung am Zylinder und Abgasnachbehandlungssystem zu minimieren, was durch Reduzierung der Masse und der Länge dieses Teilstückes erreicht werden kann. Zielführend dabei kann die weitestgehende Integration des Abgaskrümmers in den Zylinderkopf sein.

Bei mittels Abgasturbolader aufgeladenen Brennkraftmaschinen wird angestrebt, die Turbine möglichst nahe am Auslaß, d. h. den Auslaßöffnungen der Zylinder, anzuordnen, um auf diese Weise die Abgasenthalpie der heißen Abgase, die maßgeblich vom Abgasdruck und der Abgastemperatur bestimmt wird, optimal nutzen zu können und ein schnelles Ansprechverhalten des Turboladers zu gewährleisten. Auch dabei sollte die thermische Trägheit und das Volumen des Leitungssystems zwischen den Auslaßöffnungen der Zylinder und der Turbine minimiert werden, weshalb wiederum die weitestgehende Integration des Abgaskrümmers in den Zylinderkopf zielführend ist.

Zunehmend häufig wird der Abgaskrümmer auch deshalb weitgehend in den Zylinderkopf integriert, um von einer im Zylinderkopf vorgesehenen Kühlung zu partizipieren und den Krümmer nicht aus thermisch hoch belastbaren Werkstoffen fertigen zu müssen, die kostenintensiv sind.

Die Zusammenführung der Abgasleitungen möglichst umfänglich bereits im Zylinderkopf vorzunehmen führt grundsätzlich zu einer kompakteren Bauweise, gestattet ein dichteres Packaging und bietet zudem Kosten- und Gewichtsvorteile.

Vorteilhaft können aber auch Ausführungsformen der fremdgezündeten Brennkraftmaschine sein, bei denen sich der Wandabschnitt bis zur Außenseite des mindestens einen Zylinderkopfes erstreckt.

Vorliegend werden die Abgasströme der mindestens zwei Zylinder bis zum Verlassen des Zylinderkopfes durch den Wandabschnitt voneinander getrennt, so dass das Abgasabführsystem in Gestalt von mindestens zwei Austrittsöffnungen aus dem Zylinderkopf austritt. Die Abgasleitungen der Zylinder bzw. die Teilabgasleitungen werden stromabwärts des Zylinderkopfes und damit erst außerhalb des Zylinderkopfes zu einer gemeinsamen Abgasleitung zusammengeführt.

Vorteilhaft können auch Ausführungsformen der fremdgezündeten Brennkraftmaschine sein, bei denen die Abgasleitungen des ersten und des zweiten Zylinders außerhalb des mindestens einen Zylinderkopfes zu einer gemeinsamen Abgasleitung zusammenführen und der Wandabschnitt über die Außenseite des mindestens einen Zylinderkopfes hinaus in das Abgasabführsystem hineinragt.

Gemäß dieser Ausführungsform werden die Abgasströme der mindestens zwei Zylinder auch noch nach Verlassen des Zylinderkopfes durch den dazwischen liegenden Wandabschnitt voneinander getrennt. Auch bei dieser Ausführungsform der Brennkraftmaschine tritt das Abgasabführsystem in Gestalt von mindestens zwei Austrittsöffnungen aus dem Zylinderkopf aus.

Bei mittels Abgasturboaufladung aufgeladenen Brennkraftmaschinen, bei denen eine zweiflutige Turbine vorgesehen ist, können Ausführungsformen vorteilhaft sein, die dadurch gekennzeichnet sind, dass sich der Wandabschnitt, welcher in das Abgasabführsystem hineinragt, bis in den Eintrittsbereich der Turbine hinein erstreckt. Die Abgasleitungen der mindestens zwei Zylinder führen dann in der Turbine oder stromabwärts der Turbine zu einer gemeinsamen Abgasleitung zusammen.

Bei mittels Abgasturboaufladung aufgeladenen Brennkraftmaschinen, bei denen zwei Turbinen vorgesehen sind, können Ausführungsformen vorteilhaft sein, die dadurch gekennzeichnet sind, dass eine erste Turbine in der mindestens einen Abgasleitung des ersten Zylinders angeordnet ist und eine zweite Turbine in der mindestens einen Abgasleitung des zweiten Zylinders angeordnet ist, wobei die Abgasleitungen der mindestens zwei Zylinder stromabwärts der beiden Turbinen zu einer gemeinsamen Abgasleitung zusammenführen. Der Wandabschnitt kann sich auch dabei bis zu den Turbinen hin erstrecken.

Der Wandabschnitt kann modular ausgebildet sein, wobei der mindestens eine Zylinderkopf einen ersten Teilabschnitt und der Eintrittsbereich der Turbine oder ein externer Krümmer einen zweiten Teilabschnitt ausbildet.

Vorteilhaft sind Ausführungsformen der fremdgezündeten Brennkraftmaschine, bei denen der in der Zündfolge der Fremdzündung vorangehende Zylinder als abgasliefernder Zylinder dient, der als Zündgas dienendes Abgas liefert, und der in der Zündfolge darauffolgende Zylinder als abgasempfangender Zylinder dient, in welchen das Zündgas eingeleitet wird.

Zwei in der Zündfolge aufeinander folgende Zylinder haben den geringsten Versatz hinsichtlich ihrer Arbeitsprozesse und bieten sich daher für die Überleitung von Abgas von einem Zylinder in den anderen Zylinder an, d. h. von dem in der Zündfolge vorangehenden Zylinder in den in der Zündfolge darauffolgenden Zylinder.

Bei einem Vier-Zylinder-Reihenmotor, dessen Zylinder mit der Zündfolge 1 - 3 - 4 - 2 betrieben werden, bietet sich beispielsweise der vierte Zylinder an, für den in der Zündfolge vorangehenden dritten Zylinder das Zündgas für die Selbstzündung zu liefern.

Vorteilhaft sind Ausführungsformen der fremdgezündeten Brennkraftmaschine, bei denen jeder Zylinder mindestens zwei Auslaßöffnungen zum Abführen der Abgase aus dem Zylinder aufweist.

Wie bereits ausgeführt wurde, wird während des Ladungswechsels eine schnelle Freigabe möglichst großer Strömungsquerschnitte angestrebt, um die Drosselverluste in den ausströmenden Abgasströmungen gering zu halten und ein effektives Abführen der Abgase zu gewährleisten. Deshalb ist es vorteilhaft, die Zylinder mit zwei oder mehr Auslaßöffnungen auszustatten.

Bei Brennkraftmaschinen, bei denen jeder Zylinder mindestens zwei Auslaßöffnungen zum Abführen der Abgase aus dem Zylinder aufweist, sind Ausführungsformen der fremdgezündeten Brennkraftmaschine vorteilhaft, bei denen die Auslaßöffnung, die dem in der Zündfolge darauffolgenden Zylinder zugewandt und am nächsten ist, eine frühere Öffnungszeit aufweist, und die Auslaßöffnung, die von dem in der Zündfolge darauffolgenden Zylinder abgewandt und weiter entfernt angeordnet ist, eine spätere Öffnungszeit aufweist.

Die Auslaßöffnung des abgasliefernden Zylinders, die dem in der Zündfolge darauffolgenden Zylinder zugewandt und am nächsten ist, ist die Auslaßöffnung, deren Abgas via Abgasabführsystem den kürzeren Weg zu diesem in der Zündfolge folgenden abgasempfangenden Zylinder aufweist. Insofern ist diese nächstgelegene Auslaßöffnung die im Hinblick auf die Abgasüberleitung geeignete Auslaßöffnung, deren Funktion, nämlich der Überleitung von Zündgas, sinnvoll dadurch unterstützt werden kann, dass diese Auslaßöffnung früher geöffnet wird, wodurch dem Abgastransfer mehr Zeit eingeräumt wird.

Die andere Auslaßöffnung, die von dem in der Zündfolge darauffolgenden Zylinder abgewandt und weiter entfernt angeordnet ist, kann später geöffnet werden, muß aber nicht später geöffnet werden.

Bei Brennkraftmaschinen, bei denen jeder Zylinder mindestens zwei Auslaßöffnungen zum Abführen der Abgase aus dem Zylinder aufweist, sind auch Ausführungsformen der fremdgezündeten Brennkraftmaschine vorteilhaft, bei denen die Auslaßöffnung, die dem in der Zündfolge vorangehenden Zylinder zugewandt und am nächsten ist, eine spätere Schließzeit aufweist, und die Auslaßöffnung, die von dem in der Zündfolge vorangehenden Zylinder abgewandt und weiter entfernt angeordnet ist, eine frühere Schließzeit aufweist.

Auch diese Ausführungsform unterstützt die Überleitung von Abgas, d. h. von Zündgas, in vorteilhafter Weise. Im Unterschied zu der vorher beschriebenen Ausführungsform wird der Transfer von Abgas aber nicht durch geeignete Steuerzeiten der Auslaßöffnungen des abgasliefernden Zylinders, sondern vielmehr durch geeignete Steuerzeiten der Auslaßöffnungen des abgasempfangenden Zylinders unterstützt. Die erzielte Verbesserung beruht aber auf denselben Effekten, wobei eine Auslaßöffnung des abgasempfangenden Zylinders länger geöffnet bleibt, d. h. später geschlossen wird, um dem bereits im Abgasabführsystem befindlichen Zündgas mehr Zeit für den Transfer zur Verfügung zu stellen.

Vorteilhaft sind Ausführungsformen der fremdgezündeten Brennkraftmaschine, bei denen mindestens eine Aufladevorrichtung vorgesehen ist.

Die Aufladung dient in erster Linie der Leistungssteigerung der Brennkraftmaschine. Die für den Verbrennungsprozeß benötigte Luft wird dabei verdichtet, wodurch jedem Zylinder pro Arbeitsspiel eine größere Luftmasse zugeführt werden kann. Dadurch können die Kraftstoffmasse und damit der Mitteldruck gesteigert werden. Die Aufladung ist ein geeignetes Mittel, bei unverändertem Hubraum die Leistung einer Brennkraftmaschine zu steigern, oder bei gleicher Leistung den Hubraum zu reduzieren. In jedem Fall führt die Aufladung zu einer Erhöhung der Bauraumleistung und einer günstigeren Leistungsmasse. Bei gleichen Fahrzeugrandbedingungen läßt sich so das Lastkollektiv zu höheren Lasten hin verschieben, bei denen der spezifische Kraftstoffverbrauch niedriger ist.

Als Aufladevorrichtung kann beispielsweise ein Abgasturbolader und/oder ein Kompressor eingesetzt werden.

Vorteilhaft sind insbesondere Ausführungsformen der fremdgezündeten Brennkraftmaschine, bei denen als Aufladevorrichtung mindestens ein Abgasturbolader vorgesehen ist.

Ein Abgasturbolader umfaßt einen Verdichter und eine Turbine, die auf derselben Welle angeordnet sind. Der heiße Abgasstrom wird der Turbine zugeführt und entspannt sich unter Energieabgabe in der Turbine, wodurch die Welle in Drehung versetzt wird. Die vom Abgasstrom an die Turbine und schließlich an die Welle abgegebene Energie wird für den Antrieb des ebenfalls auf der Welle angeordneten Verdichters genutzt. Der Verdichter fördert und komprimiert die ihm zugeführte Ladeluft, wodurch eine Aufladung der Zylinder erreicht wird. Gegebenenfalls ist eine Ladeluftkühlung vorgesehen, mit der die komprimierte Verbrennungsluft vor Eintritt in die Zylinder gekühlt wird.

Die Drehmomentcharakteristik einer aufgeladenen Brennkraftmaschine kann durch unterschiedliche Maßnahmen optimiert werden. Beispielsweise durch eine kleine Auslegung des Turbinenquerschnittes und gleichzeitiger Abgasabblasung, insbesondere aber durch den Einsatz mehrerer Abgasturbolader, deren Turbinen parallel oder in Reihe angeordnet werden.

Vorteilhaft sind Ausführungsformen der fremdgezündeten Brennkraftmaschine, bei denen zum Einbringen von Kraftstoff in die Zylinder eine Direkteinspritzung vorgesehen ist.

Die Einspritzung von Kraftstoff direkt in den Brennraum des Zylinders wird als eine geeignete Maßnahme angesehen, den Kraftstoffverbrauch auch bei Ottomotoren spürbar zu reduzieren, weshalb die Entwicklung direkteinspritzender Ottomotoren zunehmend an Bedeutung gewonnen hat.

Die Direkteinspritzung ist prinzipbedingt mit einer Innenkühlung des Brennraums bzw. des Gemisches verbunden, wodurch eine höhere Verdichtung und/oder Aufladung und folglich eine bessere Ausnutzung des Kraftstoffes ohne Klopfen möglich ist.

Die direkte Einspritzung des Kraftstoffes in den Brennraum ist darüber hinaus ein geeignetes Mittel zur Realisierung einer geschichteten Brennraumladung, die ebenfalls zur Entdrosselung des ottomotorisches Arbeitsverfahren beiträgt, da die Brennkraftmaschine mit Hilfe des Schichtladebetriebs sehr weit abgemagert werden kann, was insbesondere im Teillastbetrieb d. h. im unteren und mittleren Lastbereich, wenn nur geringe Kraftstoffmengen einzuspritzen sind, thermodynamische Vorteile bietet.

Bei Brennkraftmaschinen, bei denen jede Auslaßöffnung mit einem Auslaßventil ausgestattet ist, welches mittels Ventilbetätigungseinrichtung steuerbar ist und die Auslaßöffnung freigibt oder verschließt, sind Ausführungsformen vorteilhaft, die dadurch gekennzeichnet sind, dass die Ventilbetätigungseinrichtung zur Variation der Steuerzeiten zumindest teilweise variabel ausgebildet ist und die Steuerzeiten in Abhängigkeit davon variiert, ob ein Zylinder ein abgasliefernder Zylinder oder ein abgasempfangender Zylinder ist.

Bei Brennkraftmaschinen, bei denen jede Auslaßöffnung mit einem Auslaßventil ausgestattet ist, welches mittels zumindest teilweise variabler Ventilbetätigungseinrichtung steuerbar ist, sind Ausführungsformen vorteilhaft, die dadurch gekennzeichnet sind, dass die Ventilbetätigungseinrichtung mindestens zwei unterschiedliche Nocken für die Betätigung des Auslaßventils umfaßt, wobei die mindestens zwei unterschiedlichen Nocken unterschiedlich lange Öffnungsdauern des mindestens einen Auslaßventils je Zylinder generieren.

Vorteilhaft ist dies im Hinblick auf das Überleiten von als Zündgas dienendem Abgas. Um das Überleiten von Abgas zu starten, d. h. zu ermöglichen, bzw. das Überleiten von Abgas zu unterstützen, d. h. zu verbessern bzw. zu erleichtern, ist es vorteilhaft, die Öffnungsdauer der mindestens einen Auslaßöffnung jedes Zylinders zu vergrößern.

Die Öffnungsdauer einer Auslaßöffnung kann dadurch vergrößert werden, dass das dazugehörige Ventil früher geöffnet und/oder später geschlossen wird. Die Vergrößerung der Öffnungsdauer kann sowohl eine Maßnahme sein, mit der das Verfahren zur Überleitung von Zündgas überhaupt erst und in Abweichung vom normalen Betrieb der Brennkraftmaschine ermöglicht wird, d. h. ein Maßnahme, mit der das Überleiten gestartet wird. Die Vergrößerung der Öffnungsdauer kann aber auch als Maßnahme zur Verbesserung der Überleitung von Abgas eingesetzt werden.

Durch das Vergrößern der Öffnungsdauer der Auslaßöffnungen wird erreicht, dass die Abgasausschiebetakte der einzelnen Zylinder sich im Rahmen der Ladungswechsel überschneiden bzw. stärker überschneiden. Das Überleiten von als Zündgas dienendem Abgas aus einem ersten abgasliefernden Zylinder in einen zweiten abgasempfangenden Zylinder wird in vorteilhafter Weise unterstützt.

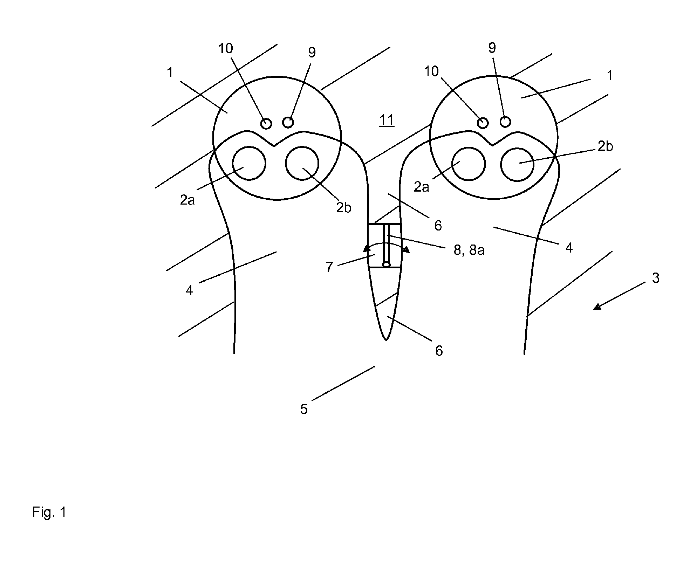

Im Folgenden wird die Erfindung anhand eines Ausführungsbeispiels gemäß Figur 1 näher beschrieben. Hierbei zeigt:
- Fig. 1: schematisch das Fragment eines Zylinderkopfes einer Ausführungsform der fremdgezündeten Brennkraftmaschine.

Figur 1 zeigt schematisch das Fragment eines Zylinderkopfes 11 einer Ausführungsform der fremdgezündeten Brennkraftmaschine.

Dargestellt sind zwei benachbarte Zylinder 1 des Zylinderkopfes 11. Jeder Zylinder 1 weist zwei Auslaßöffnungen 2a, 2b zum Abführen der Abgase via Abgasabführsystem 3 auf, an die sich Abgasleitungen 4 anschließen.

Die Abgasleitungen 4 der beiden Zylinder 1 führen unter Ausbildung eines integrierten Abgaskrümmers innerhalb des Zylinderkopfes 11 zu einer gemeinsamen Abgasleitung 5 zusammen, wobei ein Wandabschnitt 6, der in das Abgasabführsystem 3 hineinragt, die Abgasleitungen 4 der zwei benachbarten Zylinder 1 ausgehend von den Auslaßöffnungen 2a, 2b der beiden Zylinder 1 über ein Teilstück des Abgasabführsystems 3 hinweg voneinander trennt.

In dem Wandabschnitt 6 ist eine Öffnung 7 vorgesehen, die mit einem verstellbaren Absperrelement 8 in Gestalt einer verschwenkbaren Klappe 8a ausgestattet ist. Durch Verschwenken der Klappe 8a wird die Öffnung 7 entweder freigegeben oder verschlossen, wodurch ein Überleiten von Abgas ermöglicht werden kann. Bei freigegebener, d. h. offenstehender, Öffnung 7 wird als Zündgas dienendes und während des Ladungswechsels in das Abgasabführsystem 3 abgeführtes Abgas eines der beiden Zylinder 1 via Abgasabführsystem 3 und freigegebener Öffnung 7 in den benachbarten anderen Zylinder 1 eingeleitet, um eine Selbstzündung zu induzieren.

Jeder Zylinder 1 ist zur Einleitung einer Fremdzündung mit einer Zündkerze 9 und zum Einbringen von Kraftstoff mit einer Einspritzdüse 10 ausgestattet.

### Bezugszeichen

- 1: Zylinder
- 2a: erste Auslaßöffnung eines Zylinders
- 2b: zweite Auslaßöffnung eines Zylinders
- 3: Abgasabführsystem
- 4: Abgasleitung
- 5: gemeinsame Abgasleitung
- 6: Wandabschnitt
- 7: Öffnung
- 8: Absperrelement
- 8a: verschwenkbare Klappe
- 9: Zündkerze
- 10: Einspritzdüse
- 11: Zylinderkopf

- T: Last
- *Tₘₐₓ*: maximale Last bei momentaner Drehzahl
- *T_{threshold}*: Schwellenwert für die Last, bei der die Selbstzündung wieder deaktiviert wird

- λ: Luftverhältnis

## Patentansprüche

1. Fremdgezündete Brennkraftmaschine mit mindestens einem Zylinderkopf (11) und mindestens zwei Zylindern (1), bei der
- jeder Zylinder (1) mindestens eine Auslaßöffnung (2a,2b) zum Abführen der Abgase aus dem Zylinder (1) via Abgasabführsystem (3) aufweist,
- sich an jede Auslaßöffnung (2a, 2b) eine Abgasleitung (4) anschließt,
- die Abgasleitungen (4) von mindestens zwei Zylindern (1) unter Ausbildung eines Abgaskrümmers zu einer gemeinsamen Abgasleitung (5) zusammenführen, wobei ein Wandabschnitt (6), der in das Abgasabführsystem (3) hineinragt, die mindestens eine Abgasleitung (4) eines ersten Zylinders (1) und die mindestens eine Abgasleitung (4) eines zweiten Zylinders (1) ausgehend von den Auslaßöffnungen (2a, 2b) der beiden Zylinder (1) über eine vorgebare Wegstrecke voneinander trennt, und
- das Abgasabführsystem (3) an einer Außenseite des mindestens einen Zylinderkopfes (11) austritt,
**dadurch gekennzeichnet, dass**
- in dem Wandabschnitt (6) mindestens eine Öffnung (7) vorgesehen ist, die mit einem verstellbaren Absperrelement (8) ausgestattet ist, welches diese Öffnung (7) freigibt oder verschließt, so dass bei freigegebener Öffnung (7) als Zündgas dienendes und während des Ladungswechsels in das Abgasabführsystem (3) abgeführtes Abgas eines Zylinders (1) via Abgasabführsystem (3) und freigegebener Öffnung (7) in den anderen Zylinder (1) einleitbar ist, um eine Selbstzündung zu induzieren.

2. Fremdgezündete Brennkraftmaschine nach Anspruch 1, **dadurch gekennzeichnet, dass** jeder Zylinder (1) zur Einleitung einer Fremdzündung mit einer Zündkerze (9) ausgestattet ist.

3. Fremdgezündete Brennkraftmaschine nach Anspruch 2, **dadurch gekennzeichnet, dass** der Abstand der Elektroden jeder Zündkerze (9) auf niedrige Lasten auslegt ist.

4. Fremdgezündete Brennkraftmaschine nach einem der vorherigen Ansprüche, **dadurch gekennzeichnet, dass** die Abgasleitungen (4) des ersten und des zweiten Zylinders (1) unter Ausbildung eines integrierten Abgaskrümmers innerhalb des mindestens einen Zylinderkopfes (11) zu einer gemeinsamen Abgasleitung (5) zusammenführen.

5. Fremdgezündete Brennkraftmaschine nach einem der Ansprüche 1 bis 3, **dadurch gekennzeichnet, dass** sich der Wandabschnitt (6) bis zur Außenseite des mindestens einen Zylinderkopfes (11) erstreckt.

6. Fremdgezündete Brennkraftmaschine nach einem der Ansprüche 1 bis 3, **dadurch gekennzeichnet, dass** die Abgasleitungen (4) des ersten und des zweiten Zylinders (1) außerhalb des mindestens einen Zylinderkopfes (11) zu einer gemeinsamen Abgasleitung (5) zusammenführen und der Wandabschnitt (6) über die Außenseite des mindestens einen Zylinderkopfes (11) hinaus in das Abgasabführsystem (3) hineinragt.

7. Fremdgezündete Brennkraftmaschine nach einem der vorherigen Ansprüche, **dadurch gekennzeichnet, dass** der in der Zündfolge der Fremdzündung vorangehende Zylinder (1) als abgasliefernder Zylinder (1) dient, der als Zündgas dienendes Abgas liefert, und der in der Zündfolge darauffolgende Zylinder (1) als abgasempfangender Zylinder (1) dient, in welchen das Zündgas eingeleitet wird.

8. Fremdgezündete Brennkraftmaschine nach einem der vorherigen Ansprüche, **dadurch gekennzeichnet, dass** jeder Zylinder (1) mindestens zwei Auslaßöffnungen (2a, 2b) zum Abführen der Abgase aus dem Zylinder (1) aufweist.

9. Fremdgezündete Brennkraftmaschine nach Anspruch 8, **dadurch gekennzeichnet, dass** die Auslaßöffnung (2a, 2b), die dem in der Zündfolge darauffolgenden Zylinder (1) zugewandt und am nächsten ist, eine frühere Öffnungszeit aufweist, und die Auslaßöffnung (2a, 2b), die von dem in der Zündfolge darauffolgenden Zylinder (1) abgewandt und weiter entfernt angeordnet ist, eine spätere Öffnungszeit aufweist.

10. Fremdgezündete Brennkraftmaschine nach Anspruch 8 oder 9, **dadurch gekennzeichnet, dass** die Auslaßöffnung (2a, 2b), die dem in der Zündfolge vorangehenden Zylinder (1) zugewandt und am nächsten ist, eine spätere Schließzeit aufweist, und die Auslaßöffnung (2a, 2b), die von dem in der Zündfolge vorangehenden Zylinder (1) abgewandt und weiter entfernt angeordnet ist, eine frühere Schließzeit aufweist.

11. Fremdgezündete Brennkraftmaschine nach einem der vorherigen Ansprüche, **dadurch gekennzeichnet, dass** mindestens eine Aufladevorrichtung vorgesehen ist.

12. Fremdgezündete Brennkraftmaschine nach Anspruch 11, **dadurch gekennzeichnet, dass** als Aufladevorrichtung mindestens ein Abgasturbolader vorgesehen ist.

13. Fremdgezündete Brennkraftmaschine nach einem der vorherigen Ansprüche, **dadurch gekennzeichnet, dass** zum Einbringen von Kraftstoff in die Zylinder (1) eine Direkteinspritzung vorgesehen ist.

14. Fremdgezündete Brennkraftmaschine nach einem der Ansprüche 7 bis 13, bei der jede Auslaßöffnung (2a, 2b) mit einem Auslaßventil ausgestattet ist, welches mittels Ventilbetätigungseinrichtung steuerbar ist und die Auslaßöffnung (2a, 2b) freigibt oder verschließt, **dadurch gekennzeichnet, dass** die Ventilbetätigungseinrichtung zur Variation der Steuerzeiten zumindest teilweise variabel ausgebildet ist und die Steuerzeiten in Abhängigkeit davon variiert, ob ein Zylinder (1) ein abgasliefernder Zylinder (1) oder ein abgasempfangender Zylinder (1) ist.

15. Fremdgezündete Brennkraftmaschine nach einem der Ansprüche 7 bis 14, bei der jede Auslaßöffnung (2a, 2b) mit einem Auslaßventil ausgestattet ist, welches mittels zumindest teilweise variabler Ventilbetätigungseinrichtung steuerbar ist, **dadurch gekennzeichnet, dass** die Ventilbetätigungseinrichtung mindestens zwei unterschiedliche Nocken für die Betätigung des Auslaßventils umfaßt, wobei die mindestens zwei unterschiedlichen Nocken unterschiedlich lange Öffnungsdauern des mindestens einen Auslaßventils je Zylinder (1) generieren.
